# EUROPÄISCHE PATENTANMELDUNG

(11) **EP 3 144 762 A1**
(43) Veröffentlichungstag der Anmeldung: **22.03.2017**
(21) Anmeldenummer: 15185282.9
(22) Anmeldetag: 15.09.2015
(51) Int. Cl.: G05B 19/418

(54) **SYSTEM UND VERFAHREN ZUR STEUERUNG UND/ODER ANALYTIK EINES INDUSTRIELLEN PROZESSES MITTELS EINER ANLAGENEXTERNEN RECHENEINHEIT UND EINEM REVISIONSMODUL FÜR DEN SYSTEMBETREIBER**

(71) Anmelder: Siemens Aktiengesellschaft, 80333 München (DE)
(72) Erfinder: Verma, Amit, 91052 Erlangen (DE)

(57) **Zusammenfassung**

Die Erfindung betrifft ein System zur Steuerung und/oder Analytik eines industriellen Prozesses (1), aufweisend anlagenseitig wenigstens eine Automatisierungs- oder Rechnereinheit (2, 5, 6, 7) eines Systembetreibers, wobei die wenigstens eine Automatisierungs- und Rechnereinheit die erste Prozessgrößenberechnungen (19) durchführt und auf den Prozess (1) einwirkt, aufweisend anlagenextern eine Recheneinheit (9) eines vom Systembetreiber verschiedenen Servicebetreibers, wobei die anlagenexterne Recheneinheit eine Anzahl zweiter Prozessgrößenberechnungen (14) durchführt und die über eine Datenverbindung (15) lokalen Daten (3, 4, 12, 19) von der wenigstens einen Automatisierungs- oder Rechnereinheit (2, 5, 6, 7) erhält, dadurch gekennzeichnet, dass die anlagenexterne Recheneinheit (9) ein Revisionsmodul (24) aufweist, wobei das Revisionsmodul die von der wenigstens einen Automatisierungsund Rechnereinheit erhaltenden lokalen Daten protokolliert und für einen Zugriff des Systembetreibers außerhalb der wenigstens einen anlagenseitigen Automatisierungs- und Rechnereinheiten bereitstellt.

## Beschreibung

Die Erfindung betrifft ein System und ein Verfahren zur Steuerung und/oder Analytik eines industriellen Prozesses eines Systembetreibers mittels einer anlagenexternen Recheneinheit und einem Revisionsmodul für den Systembetreiber innerhalb der anlagenexternen Recheneinheit.

Eine Vielzahl von Anlagen, die eine Prozesssteuerung vornehmen, erfüllt in der Regel automatisierungs- und regelungstechnische Aufgaben. Diese Aufgaben werden in der Regel von Automatisierungseinheiten durchgeführt, die Vor-Ort und damit in der Nähe des zu automatisierenden Prozesses installiert. Solche Automatisierungseinheiten sind aufgrund ihrer eingeschränkten Rechenleistung eher nicht in der Lage komplexe Regelungsstrukturen oder Regelungs- und/oder Simulationsstrategien abzubilden, wie sie in Automatisierungsgeräten der höheren Klassen möglich sind. Solche komplexeren Regelungsstrategien, die eine erhebliche Rechenkapazität benötigen können, können beispielsweise sogenannte modellprädiktive Regelungen (Model Predictive Control, MPC) sein, wie sie bevorzugt in verfahrenstechnischen Prozessen eingesetzt werden. Häufig besteht auch der Wunsch komplexe Regelungen einzurichten, die auf umfangreichen historischen Daten aufbauen und diese beispielsweise in sog. Support Vector Machines (SVM) zu nutzen, um auf dieser Basis Optimierungen am Prozess vornehmen zu können. Deshalb werden solche rechenintensiven verfahrenstechnische Prozesse oder Datenanalysemodelle häufig im übergeordneten Steuerungs-, und Überwachungssystem der Anlage automatisiert.

Wir erleben aktuell einen Trend in Richtung zentraler Datenanalytik in externen Rechnereinheiten (sog. cloud based analytic). Mit diesen externen Rechnereinheiten können Prozesssteuerungen für eine industrielle Anlage Cloud-basiert durchgeführt werden kann, indem die Prozessdaten von einer Anlage gesammelt werden, um sie dann einer externen Recheneinheit zur Analyse bereitzustellen. Das Analyseergebnis wird zur Verbesserung der Prozesssteuerung und Prozessoptimierung an die Anlage zurückgesendet. Aufgrund seiner umfangreichen Analytikmethoden und der meist selbstlernenden Techniken erlaubt die Cloud-basierte Analytik eine wesentliche Verbesserung der Prozesssteuerungen. Ferner werden historische Daten, die über einen längeren Zeitraum gesammelt werden zur Analyse in einer externen Rechnereinheit gespeichert. Die externe Rechnereinheit kann aber auch Daten eines MES (Manufacturing Execution Systems) oder ERP-System (Enterprise resource planning) umfassen. Solche MES oder ERP-Systeme besitzen einen weiten Funktionsumfang, wobei deren Funktionen ebenso auf den unterschiedlichsten Prozessdaten und Prozessgrößenberechnungen basieren. Auch die in diesen Systemen vorliegenden Zwischendaten, die einer weiteren Verarbeitung unterliegen können Relevanz für die Prozesssteuerung erhalten. Während Prozessgrößenberechnungen der Automatisierungseinheiten i.d.R direkt auf den industriellen Prozess einwirken (beispielsweise durch Sollwertvorgaben für einen Regler) wirken die Prozessgrößenberechnungen von MES oder ERP-Systemen eher indirekt auf den industriellen Prozess ein, indem das MES für das Terminieren von Produktionsprozessen verantwortlich zeigt beispielsweise durch die Bestimmung des Produktionsplanes durch Sammlung von Aufträgen, oder indem ein MES eine Überprüfung und das Management von Ressourcen ausführt, um die Produktion vorzubereiten oder Produktionsbestellungen mit den notwendigen materiellen Ressourcen durchzuführen und/oder andere System über den Fortschritt des Produktionsprozesses zu informieren. Oder ein Einwirken auf den Prozess erfolgt indirekt durch den Austausch von Prozessdaten, der Statusanalyse von Betriebseinrichtungsgegenständen, Materialverbrauchsinformationen oder historischen oder aktuellen Produktionsdaten.

Vorgenannte Daten eines Prozesses sind sensible Daten des Systembetreibers, dennoch sollen sie vielfach in externen Recheneinheiten abgelegt werden, die öffentliche oder sogenannte hybride Clouds darstellen. Damit gelangen diese Daten aus dem unmittelbaren Verantwortungs- und Zugriffsbereich des Systembetreibers, was als problematisch angesehen wird. Hinzu kommt, dass eine solche öffentliche oder hybride Cloud auch Daten von unterschiedlichen Systembetreibern und Unternehmen speichert und bearbeitet. Außerdem unterliegen Firmenorganisationen hinsichtlich ihres Datenhandlings ihren eigenen unterschiedlichen Sicherheitsbestimmungen, diese können von übergeordneten Sicherheitsbestimmungen beeinflusst sein, die sich von Land zu Land aufgrund von Gesetzesvorgaben unterscheiden können. Sobald die Daten die Grenzen der Unternehmen verlassen, kann es für die Unternehmen schwierig sein, die Einhaltung von Vorschriften durchzusetzen.

Anbieter von Cloud-basierten Applikationen oder von Clouds als solche, kennen das Problem, dass Kunden sich beklagen, nicht genügend Transparenz darüber zu erhalten, welche ihrer Daten in welchem Umfang gespeichert werden und wie diese durch den Anbieter genutzt werden. Dies führt dazu, dass Kunden sich schwer tun Cloud-basierte Serviceangebote anzunehmen und zu akzeptieren.

Die Revision von Daten eines Unternehmens kann für Daten, die sich innerhalb der Unternehmensgrenzen befinden, leicht durchgeführt werden, für Daten die sich in einer Cloud befinden - noch dazu eines anderen Anbieters - kann dies weit problematischer sein.

Klare Lösungen für die beschriebene Problematik existieren derzeit nicht. Cloud-basierte Serviceanbieter konfigurieren ihre Datensammler so, dass sie nur relevante und vertragskonforme Daten sammeln. Dennoch wünschen sich Kunden mehr Transparenz darüber, welche Daten in der Cloud gespeichert sind und sie wünschen sich mehr Kontrolle darüber wie die Daten genutzt und innerhalb der Cloudanwendung verarbeitet werden. Dies ist aber aus noch einem anderen Gründe problematisch. Die Cloud-basierte Speicherung von Daten ist heterogen. Öffentliche oder hybride Cloud-Systeme speichern Daten von unterschiedlichen Unternehmen innerhalb einer Cloud mit Hilfe von Datensammlern oder Datenübermittlern (agentenbasiert oder agentenlos). Dabei können die Unternehmensdaten in der Cloud in verschiedenen Datenspeichern gespeichert sein. Die Datenspeicher können Datenbanken sein (SQL, Oracle, MS-Access etc.), Dateisysteme (Dateien verschiedenen Typs), Daten Archive, große Datenspeichern (Hadoop cluster, NoSQL, MongoDB, Rabbit, etc.), Caches usw. Auf der einen Seite können die Daten verschiedener Unternehmen in hinsichtlich der Organisationen getrennten Modellen gespeichert sein (sog. perfect multi-tenant models). Nach diesem Modell erfolgt eine Zusammenfassung und Kapselung streng nach den Unternehmen. Die Datenspeicher sind getrennt, jede Organisation hat ihre eigene SQL Datenbank und ihr eigenes Dateiensystem. Auf der anderen Seite können Daten in hinsichtlich der Datenspeicher getrennten Modellen organisiert sein, d.h. die SQL Datenbank und/oder das Dateisystem umfassen die Daten verschiedener Unternehmen (sog. mixed multi-tenant models)

Ausgehend von den vorbeschriebenen Problemen ist es demnach Aufgabe der Erfindung ein System zur Steuerung und/oder Analytik eines industriellen Prozesses mittels einer anlagenexternen Recheneinheit anzugeben, welches die Transparenz und Kontrolle gegenüber demjenigen verbessert, der die Daten zur Verfügung stellt. Insbesondere ist es Aufgabe die Transparenz darüber herzustellen, welche Daten genutzt und verwaltet werden.

Die Aufgabe wird gelöst durch ein System mit den Merkmalen des Anspruchs 1 und eine Vorrichtung mit den Merkmalen des Anspruchs 8.

Danach weist das System zur Steuerung eines industriellen Prozesses anlagenseitig wenigstens eine Automatisierungs-oder Rechnereinheit eines Systembetreibers auf. Bei der industriellen Anlage kann es sich um jedwede Anlage mit einem Produktions- oder Fertigungsprozess im industriellen Umfeld handeln. Anlagenseitig heißt, dass die Automatisierungs- oder Rechnereinheit Bestandteil des originären Automatisierungssystems ist und in der Regel prozessnah angeordnet ist. Die Automatisierungseinheit führt eine Vielzahl erster Prozessgrößenberechnungen durch. Dazu ist die Automatisierungseinheit mittels Sensoren und Aktoren in den Prozess eingebunden. Prozesseingangsvariablen sind die Sensoren und Aktoren, die für die Steuerung des Prozesse vom Eingangsbaustein der Automatisierungseinheit in der Regel zyklisch eingelesen und zwischengespeichert werden und somit einer weiteren softwaretechnischen Verarbeitung durch die Prozessoren der Automatisierungskomponenten zur Verfügung stehen. Die konkrete softwaretechnische Verarbeitung innerhalb der Automatisierungseinheit erfolgt nach einem Prozesssteuerungs-Algorithmus. Die Ausgangsgrößen dieser Verarbeitung, d.h. die Ergebnisse des Prozesssteuerungs-Algorithmus der anlagenseitigen Automatisierungseinheit werden über einen Ausgangsbaustein der Automatisierungseinheit in der Regel ebenfalls zyklisch prozesswirksam. Die anlagenseitige Rechnereinheit kann aber auch ein MES (Manufacturing Execution Systems) oder ERP-System (Enterprise resource planning) sein. Auch die in diesen Systemen vorliegenden Zwischendaten, die einer weiteren Verarbeitung unterliegen, sollen dem hier verwendeten Begriff der ersten Prozessgrößenberechnungen unterfallen. Während die Prozessgrößenberechnungen der Automatisierungseinheiten i.d.R. direkt auf den industriellen Prozess einwirken (beispielsweise durch Sollwertvorgaben für einen Regler) wirken die Prozessgrößenberechnungen von MES oder ERP-Systemen eher indirekt auf den industriellen Prozess ein, indem das MES für das Terminieren von Produktionsprozessen verantwortlich zeigt beispielsweise durch die Bestimmung des Produktionsplanes durch Sammlung von Aufträgen, oder indem ein MES eine Überprüfung und das Management von Ressourcen ausführt, um die Produktion vorzubereiten oder Produktionsbestellungen mit den notwendigen materiellen Ressourcen durchzuführen und/oder andere System über den Fortschritt des Produktionsprozesses zu informieren. Oder ein Einwirken auf den Prozess erfolgt indirekt durch den Austausch von Prozessdaten, der Statusanalyse von Betriebseinrichtungsgegenständen, Materialverbrauchsinformationen oder historischen oder aktuellen Produktionsdaten.

Das System weist weiter wenigstens eine anlagenexterne Recheneinheit (Cloud-Recheneinheit) auf, die zweite Prozessgrößenberechnungen durchführt und dazu über eine Datenverbindung lokale Daten von der anlagenseitigen Automatisierungs- oder Rechnereinheit erhält. Diese lokalen Daten sind Daten des Systembetreibers. Die Datenverbindung wird über bekannte Kommunikationsmechanismen und standardisierte Schnittstellen realisiert. Zu den Kommunikationsmechanismen gehören beispielsweise die Kommunikationsstandards OPC (OPC DA, OPC UA) oder TCP/IP (Profinet), die den Zusammenschluss unabhängiger Recheneinheiten zu einem verteilten System erlauben. Zu den Standard Schnittstellen RPC, OLEDDB oder SQL. Als anlagenextern soll eine Recheneinheit angesehen werden, wenn sie räumlich und/oder funktional außerhalb des originären Automatisierungssystems angesiedelt ist und im Verantwortungsbereich eines Serviceanbieters ist und damit den Verantwortungsbereich des Systembetreibers verlassen hat.

Die anlagenexterne Recheneinheit führt parallel oder zusätzlich zur Berechnung der ersten Prozessgrößenberechnungen der anlagenseitigen Automatisierungs- oder Recheneinheit zweite Prozessgrößenberechnungen durch. Im Allgemeinen werden diese zweiten Prozessgrößenberechnungen wesentlich komplexer sein und wesentlich höhere Rechenleistung verglichen mit der Rechenleistung innerhalb der lokalen Automatisierungs- oder Recheneinheit erfordern. Die komplexeren, zweiten Prozessgrößenberechnungen werden dabei in der Regel auch auf eine größere Menge von Daten fußen. Sofern diese Daten vom Prozess selbst bereitgestellt werden können (beispielsweise durch zusätzliche und bis dahin nicht genutzte Sensoren oder Aktoren), werden diese ebenfalls über die anlagenseitige Automatisierungseinheit eingelesen und bereitgestellt. Solche lokalen Daten können aber auch historische Daten oder Zwischendaten umfassen, wie sie beispielsweise innerhalb der anlagenseitigen Automatisierungs- oder Rechnereinheit selbst vorliegen. Die Berechnungen, die in der anlagenexternen Recheneinheit durchgeführt werden, sind i.d.R. weit komplexer und rechenintensiver als diejenigen, die in der anlagenseitigen Automatisierungseinheit durchgeführt werden können. So übernimmt die externe Recheneinheit erweiterte regelungstechnische Funktionen, wie sie beispielsweise von MPC-Reglern bekannt sind. Wegen der höheren Anzahl von Daten, insbesondere historischer Daten können die Prozesssteuerungs-Algorithmen beispielsweise auch sog. Support Vector Machines (SVM) basierten Model Predictive Control (MPC) Algorithmen umfassen. Weiterhin können auch Condition Monitoring Systeme, Simulationssysteme oder Historiensysteme innerhalb dieser anlagenexternen Recheneinheit zusätzliche Auswertungen und Analytiken durchführen und zu diesem Zwecke auch auf lokale Daten in der Automatisierungs- und Rechnereinheit zurückgreifen. Insoweit sollen die genannten zweiten Prozessgrößenberechnungen auch Berechnungen auf Basis von lokalen Daten umfassen, die nicht unmittelbar regelnd oder steuernd auf den Prozess zurückwirken, sondern zu anderen Zwecken beispielsweise zu Auswertezwecken dem Systembetreiber bereitgestellt werden sollen.

Die anlagenexterne Recheneinheit weist ein Revisionsmodul auf, wobei das Revisionsmodul die von der wenigstens einen Automatisierungs- und Rechnereinheit erhaltenden lokalen Daten protokolliert und für einen Zugriff außerhalb der anlagenseitigen Automatisierungs- und Rechnereinheiten bereitstellt. Unter Protokollieren ist in diesem Zusammenhang entweder das unmittelbare Mitschreiben von eingehenden lokalen Daten zu verstehen oder das spätere Auslesen von bereits eingegangenen und gespeicherten lokalen Daten. Ein Zugriff außerhalb der anlagenseitigen Automatisierungs- und Rechnereinheit meint einen unabhängigen Zugriff durch den Systembetreiber, in erster Linie den zeitlich und örtlich unabhängigen Zugriff durch den Systembetreiber, d.h. auch dann, wenn die anlagenexterne Recheneinheit Steuerungs- oder Analytikfunktionen ausführt.

Nach einer Variante umfasst das Revisionsmodul eine Protokolldatei, welche die lokalen Daten wenigstens nach Dateneigentümer und/oder Datenherkunft und/oder Datenankunftszeit und/oder Datenkategorie mit Eingang der Daten gespeichert erfasst und der Zugriff des Systembetreibers auf diese Protokolldatei erfolgt. Nach dieser Variante laufen die lokalen Daten in die anlagenexterne Recheneinheit durch einen einzigen Eingangspunkt (Schnittstelle) ein, der das Revisionsmodul umfasst. Die lokalen Daten können über sog. Agenten an das Revisionsmodul gesendet werden. An dem Eingangspunkt ordnet das Revisionsmodul die lokalen Daten einer Protokolldatei zu. Die Protokolldatei umfasst beispielsweise pro Datum den Dateneigentümer (i.d.R. den Systembetreiber), die Datenherkunft, die Datenankunftszeit, die Datenkategorie oder weitere Einträge. Der Dateneigentümer wird i.d.R. der Systembetreiber sein, in jedem Fall sollte hier die Organisation, das Unternehmen genannt sein, welches über die Daten frei verfügen kann. Sind mehrere räumlich getrennte Systeme an eine anlagenexterne Recheneinheit angeschlossen, sollte der Dateneigentümer zweckmäßiger Weise auch einen weiteren Eintrag dazu erhalten, welcher Betrieb oder Fertigungsstandort die Datenquelle darstellt. Die Datenherkunft kann beispielsweise die Automatisierungs- oder Recheneinheit beinhalten oder aber das Objekt im Prozess, welches das Datum zugeordnet werden kann, beispielsweise Kompressor A, Pumpe B). Die Datenkategorisierung kann eine Kategorisierung beispielsweise nach Produktionsdaten, Condition Monitoring Daten, Umsatzzahlen, Finanzzahlen usw. sein. In Fortbildung der Erfindung könnte eine solche Kategorisierung durch automatisierte Klassifizierungsmechanismen auf Basis von überwachten oder nicht überwachten Lernmodellen erfolgen. Der Dateneigentümer kann nun zu jeder Zeit einen kompletten Überblick darüber erlangen welche Daten bzw. Kategorien von Daten sich in der anlagenexternen Recheneinheit befinden. Dies ist vorteilhaft für beide, den Systembetreiber und den Servicebetreiber. So kann der Systembetreiber das Revisionsmodul für Compliance-Zwecke nutzen, der Servicebetreiber kann gegenüber dem Systembetreiber nachweisen, dass er nur die ggf. vertraglich vereinbarten Daten von der Anlage und den Automatisierungs- und Rechnereinheiten abgezogen hat.

Nach einem weiteren Aspekt der Erfindung, umfasst das Revisionsmodul eine Protokolldatei, die diesmal die in der anlagenexternen Recheneinheit aktuell gespeicherten lokalen Daten auf Anforderung des Systembetreibers innerhalb der analgenexternen Recheneinheit protokolliert und dem Systembetreiber bereitstellt. In dieser Variante erfolgt die Protokollierung also nicht mit Eingang der Daten in die anlagenexterne Recheneinheit sondern auf Anforderung durch den Systembetreiber, der sich einen Überblick verschaffen will, welche Daten gerade abgelegt sind. Auf diese Weise gelingt die Überprüfung auf Einhaltung bestimmter Vorschriften und Regeln des Systembetreibers. Auf diese Weise ist z.B. überprüfbar, ob Vorschriften betreffend das Löschen von Daten nach einer bestimmten Zeit eingehalten worden sind. Auf diese Weise sind aber auch zweite Prozessgrößenberechnungen durch den Systembetreiber abrufbar.

In Fortbildung dieses Aspektes umfasst das Revisionsmodul ein Momentaufnahme-Modul, welches die lokalen Daten und/oder die zweiten Prozessgrößenberechnungen auf Anforderung innerhalb der anlagenexternen Recheneinheit dupliziert und das Revisionsmodul Zugriff des Systembetreibers auf die duplizierten Daten erlaubt. Nach dieser Variante werden die lokalen Daten wie herkömmlich zunächst innerhalb der anlagenexternen Recheneinheit gespeichert. Vorteil dieser Variante ist es, dass die Daten sowohl in einem mixed-multi-tenant Modell oder einem perfect-multi-tenant Modell abgelegt sein können. In einem perfect multi-tenant Modell kann das Momentaufnahme-Modul einfach implementiert werden, indem alle Dateien, Datenbanken, usw. auf ein virtuelle Laufwerk verbunden und auf diese Weise für den Zugriff dupliziert werden. In einer anderen Variante wird das Momentaufnahme-Modul mit Zugriff des Systembetreibers eine physische Duplizierung der lokalen Daten innerhalb der anlagenexternen Recheneinheit durchführen und das Revisionsmodul den Zugriff auf diese Datei oder Datenbank erlauben. Über den Zugriff des Systembetreibers kann dieser feststellen, ob lediglich von ihm zugelassene Daten in der anlagenexternen Recheneinheit gespeichert und verbarbeitet werden.

Nach einer anderen Variante umfasst das Revisionsmodul ein Regulierungsmodul, welches für den Systembetreiber einen Zugriff auf die lokalen Daten erlaubt. Das Regulierungsmodul ist unter Kontrolle des Dateneigentümers respektive des Systembetreibers. Der Dateneigentümer kann das Regulierungsmodul beauftragen, herauszufinden welche seiner Daten in der anlagenexternen Recheneinheit gespeichert sind. Unternehmen von Systembetreibern haben unterschiedliche Auflagen, wie unternehmensbezogene Daten zu handeln sind. So kann es sein, dass kaufmännische Daten unter keinen Umständen in öffentlichen Clouds gespeichert sein dürfen, oder dass Kundendaten, die älter als 3 Jahre sind gelöscht werden müssen. Das Regulierungsmodul erlaubt dem Systembetreiber solche Politik zum Datenhandling für sich gültig zu implementieren. In einem perfect-multi-tenant Modell kann das Regulationsmodul wegen der ohnehin organisationsbezogenen Struktur der Daten relativ einfach Zugang zu den Daten des Systembetreibers erhalten. In einem mixed-multi-tenant Modell kann das Regulierungsmodul mit dem gleichen Nutzerkonto und Nutzerprivilegien, wie es die anlagenseitigen Automatisierungs- und Rechnereinheiten haben ausgestattet sein und bekommt auf diese Weise Zugang zu den Daten des Systembetreibers.

Die Aufgaben wird weiterhin gelöst durch eine anlagenexterne Recheneinheit zur Steuerung und/oder Analytik wenigstens eines industriellen Prozesses eines Systembetreibers. Die anlagenexterne Recheneinheit führt eine Anzahl zweiter Prozessgrößenberechnungen für den wenigstens einen industriellen Prozess auf Basis von lokalen Daten durch. Über eine Datenverbindung erhält die anlagenexterne Recheneinheit die lokalen Daten von einer anlagenseitigen Automatisierungs- und Rechnereinheit. Die anlagenseitige Automatisierungs- und Rechnereinheit führt erste Prozessgrößenberechnungen für den industriellen Prozess aus. Die ersten oder zweiten Prozessgrößenberechnungen werden über die anlagenseitige Automatisierungs- und Rechnereinheit prozesswirksam. Die anlagenexterne Recheneinheit weist ein Revisionsmodul auf, welches die lokalen Daten protokolliert und für einen Zugriff des Systembetreibers außerhalb der anlagenseitigen Automatisierungs- und Rechnereinheiten bereitstellt.

In Fortbildung verfügt die die anlagenexterne Recheneinheit über Datenverbindungen zu einer Mehrzahl von anlagenseitigen Automatisierungs- und Rechnereinheiten unterschiedlicher Systembetreiber. Die anlagenexterne Recheneinheit weist dann für jeden Systembetreiber ein eigenes Revisionsmodul auf, welches die lokalen Daten der anlagenseitigen Automatisierungs- und Rechnereinheiten des jeweiligen Systembetreibers protokolliert und für den Zugriff durch den jeweiligen Systembetreiber bereitstellt. Auf diese Weise kann sichergestellt werden, dass die jeweiligen Systembetreiber auf die lokalen Daten in der anlagenexternen Recheneinheit zugreifen kann, die die anlagenseitigen Automatisierungs- und Rechnereinheiten ihres Prozesses betreffen. Eine einzige anlagenseitige Recheneinheit kann für eine Vielzahl von Daten unterschiedlicher Systembetreibern verwendet werden und jeder Systembetreiber erhält durch Einblick in die Daten die notwendige Transparenz.

Die oben beschriebenen Eigenschaften, Merkmale und Vorteile dieser Erfindung sowie die Art und Weise, wie diese erreicht werden, werden in Verbindung mit den Figuren näher erläutert. Hierbei zeigen in schematischer Darstellung:
- Fig. 1: ein System für eine verteilte Prozesssteuerung einer industriellen Anlage mit einer anlagenexternen Recheneinheit
- Fig. 2: eine Funktionsweise eines Revisionsmoduls innerhalb einer anlagenexternen Recheneinheit
- Fig. 3: einen möglichen Ausschnitt aus einer Log-Datei für den Systembetreiber
- Fig. 4: eine weitere Funktionsweise eines Revisionsmoduls innerhalb der anlagenexternen Recheneinheit.

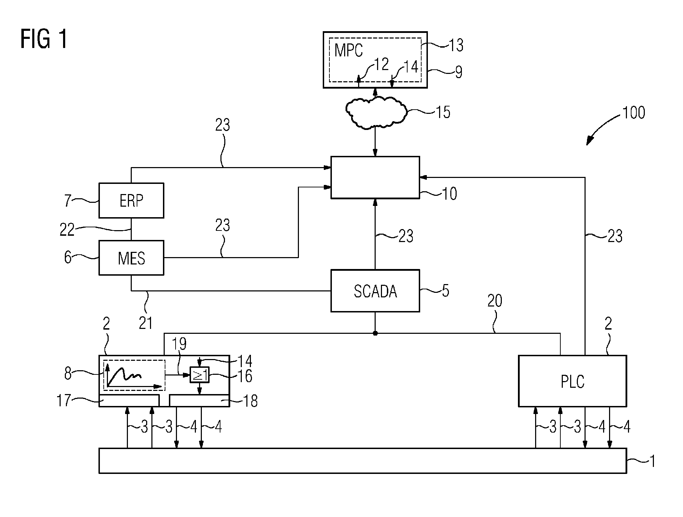

Fig.1 zeigt ein System 100 zur Steuerung des industriellen Prozesses 1, der ein beliebiger Fertigungsprozess in der verarbeitenden Industrie sein kann. Der industrielle Prozess kann ein Prozess sein, der innerhalb eines Standortes abläuft, oder aber über mehrere Standorte hinweg. Der Prozess 1 wird gesteuert und geregelt über dezentrale, anlagenseitige Automatisierungseinheiten 2. Diese sind mit einem oder mehreren hier nicht dargestellten Prozessoren ausgestattet, die in Zusammenwirken mit den notwendigen Zwischenspeichern die in Softwarecode hinterlegten Befehlsanweisungen abarbeiten. Die Befehlsanweisungen beziehen sich auf sämtliche Prozesssteuerungs-Algorithmen zur Steuerung und Regelung des Prozesses sowie auf die Daten-Kommunikation zwischen den Einheiten. Die Automatisierungseinheit 2 weist zur Steuerung und Regelung des Prozesses eine Reihe von Wirkverbindungen 3 zu in Figur 1 nicht näher dargestellten Sensoren oder Aktoren aufweisen. Über diese Verbindung liest der Eingangsbaustein 17 die lokalen Daten ein, die danach in einem Speicherbereich der Automatisierungseinheit vorliegen. Über die Wirkverbindungen 4 werden Steuerkommandos vom Ausgabebaustein 18 zu in Figur 1 nicht näher dargestellten Aktoren des Prozesses realisiert. Beispielhaft sind zwei Automatisierungseinheiten 2 gezeigt, in der Praxis werden mehrere Automatisierungseinheiten den Prozess steuern, regeln und überwachen. Über eine Datenverbindung 20 sind die Automatisierungseinheiten 2 mit dem Überwachungssystem 5 verbunden, welches die Steuerung und Überwachung des Prozesses 1 übernimmt. Das Überwachungssystem 5 (SCADA) unterhält eine Datenverbindung 21 zu dem Manufacturing Execution System 6 welches wiederum eine Datenverbindung 22 zum einem Enterprise Resource Planning-System 7 unterhält. Das Manufacturing Execution System 6 und das Enterprise Resource Planning System 7 können auch über die Datenverbindung 20 mit dem Überwachungssystem 5 kommunizieren. Die Automatisierungseinheiten 2 führen auf Basis der über Wirkverbindung 3 generierten lokalen Daten Prozesssteuerungs-Algorithmen 8 aus. Das sind prozesswirksame Überwachungsanalysen und Regelungsfunktionen, die i.d.R. einfachere und weniger komplexe Analyse- und Regelungsaufgaben beinhalten. Das Ergebnis dieses Prozesssteuerungs-Algorithmus wird als Prozessgrößenberechnung 19 in der Automatisierungseinheit 2 zur weiteren Verwendung vorgehalten und soweit nicht benötigt in einem nächsten Zyklus überschrieben. Die Prozessgrößenberechnung 19 werden aber ebenso durch Berechnungen innerhalb der übergeordneten Systeme 5, 6, 7 beeinflusst. So können beispielsweise Planungsvorgaben basierend auf Kundenbestellungen oder Materiallieferungen aus MES und ERP-System dazu führen, dass bestimmte Fertigungsprozesse langsamer, energieoptimierter oder schneller ausgeführt werden sollen. Das SCADA kann beispielsweise aufgrund von Störungen an andere Stelle des Fertigungsprozesses (beispielsweise der Verpackungsabteilung) einen vorgelagerten Fertigungsprozess (beispielsweise die Abfüllung) ebenfalls beeinflussen.
In dieser Konfiguration ist das System 100 funktionsfähig und kann seine Steuer-, Regelungs- und Überwachungsaufgaben erfüllen.

Das System 100 ist erweitert durch eine anlagenexterne Recheneinheit 9. Diese ist mit einem oder mehreren hier nicht dargestellten Prozessoren ausgestattet, die in Zusammenwirken mit den notwendigen Zwischenspeichern die in Softwarecode hinterlegten Befehlsanweisungen abarbeiten. Die Befehlsanweisungen beziehen sich auf sämtliche Prozesssteuerungs-Algorithmen zur Steuerung, Regelung und Analytik des Prozesses sowie auf die Daten-Kommunikation zwischen den Einheiten. Die Recheneinheit 9 ist über eine Datenverbindung 15 und dem Gateway 10 mit den anlagenseitigen Automatisierungs- und Recheneinheiten verbunden. Die Datenverbindung 15 wird bevorzugt über das Internet entweder kabelgebunden oder drahtlos realisiert. Das Gateway 10 kann eine Datensammlereinheit sein, die von den Automatisierungs- und Rechnereinheiten 2, 5, 6, 7 über die Datenverbindung 23 alle lokale Daten erhält, die in der Recheneinheit 9 für die dort ablaufenden vorgenannten Prozessteuerungs-Algorithmen zur Steuerung, Regelung und Analytik des Prozesses 1 notwendig sind. Die gezeigte Datenverbindung 23 ist funktional zu verstehen, physisch kann diese ein eigenes Netzwerkt sein, oder es wird die Datensammlereinheit 10 auf ein bestehendes Netzwerk innerhalb des Systems 100, beispielsweise 20, 21 aufgeschaltet. Die anlagenexterne Recheneinheit 9 führt auf Basis von Eingangsprozessvariablen 12, die vom Gateway 10 bereitgestellt werden und die im wesentlichen basieren auf die über die Wirkverbindung 3 generierten Daten Prozesssteuerungs-Algorithmen 13 durch und gibt Ergebnisse 14 dieser Berechnungen aus. Die Eingangsprozessvariablen 12 können ebenso basieren auf den historischen Daten, die in der Automatisierungseinheit 2 vorliegen. Alternativ oder zusätzlich können die Eingangsprozessvariablen 12 auf historischen Daten, die in der Recheneinheit 9 selbst vorliegen basieren. Beispielhaft stellt Fig. 1 als Prozesssteuerungs-Algorithmus 13 eine MPC Regelstruktur dar. Aber auch umfangreichere Datenanalytik kann Gegenstand des vorgenannten Algorithmus sein und die Ergebnisse 14 sind Ergebnisse solcher Analytikfunktionen. Die Ergebnisse 14 werden an die die Automatisierungs- und Rechnereinheiten 2, 5, 6, 7 übertragen. Dazu kann der Kommunkationspfad über das Gateway 10 benutzt werden oder es wird alternativ ein hier nicht dargestellter separater Kommunikationspfad genutzt. Sollen die Ergebnisse 14 auf den Prozess 1 direkt einwirken, so entscheidet innerhalb der Automatisierungseinheit 2 der Überprüfungsbaustein 16 darüber, ob die Ergebnisse 14 über den Ausgabebaustein 18 prozesswirksam werden. Alternativ können Ergebnisse 14 aber auch die einer Datenanalytik beispielsweise eines Condition Monitoring Systems sein und lediglich an die Rechnereinheiten 6,7 übertragen werden. In diesem Fall können solche Ergebnisse von Anlaytikfunktionen auch dem ERP oder MES zur Verfügung gestellt werden, wenn es beispielsweise darum geht, dass die Analytikfunktion den Ausfall eines Bauteils im Rahmen von Condition Monitoring bestimmt. Denkbar ist auch, dass Ergebnisse lediglich innerhalb der externen Recheneinheit 9 abgelegt und vorgehalten werden und für weitere Auswertungen verfügbar gemacht werden.

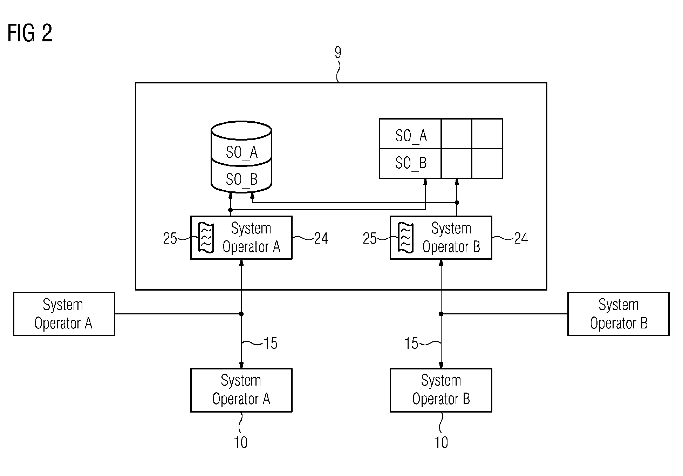

Fig. 2 zeigt schematisch die Funktionsweise des Revisionsmoduls 24 innerhalb der anlagenexternen Recheneinheit 9. Über das Gateway 10 des jeweiligen Systembetreibers SO_A, SO_B (System Operator A, System Operator B) werden über die Datenverbindung 15 die lokalen Daten der anlagenseitigen Automatisierungs- und Rechnereinheiten 2, 5, 6, 7 mittels Agenten transferiert. Die Daten der Systembetreiber gelangen nur durch ein Revisionsmodul 24 als einzigen Eingangspunkt in die anlagenexterne Recheneinheit 9. Das Revisionsmodul 24 des Systembetreibers A protokolliert die Daten von Systembetreiber A in der Log-Datei 25, Daten anderer Systembetreiber werden nicht empfangen. Das Revisionsmodul 24 des Systembetreibers B protokolliert die Daten in seiner Log-Datei 25. Alternativ kann ein Revisionsmodul 24 die Daten der Systembetreiber A und B in einer gemeinsamen Log-Datei 25 protokollieren. Nach Protokollierung der Daten schickt das Revisionsmodul 24 die Daten weiter und speichert sie innerhalb der Recheneinheit 9. Beispielhaft zeigt Fig. 2 die Ablage der Daten in einer Datenbank und in einem Dateiensystem in mixed multi-tenant Modell. Alternativ können die Daten auch in einem perfect multi-tenant Modell abgelegt werden, d.h. mit eigener Datenbank und/oder Dateiensystem für die Daten des jeweiligen Systembetreibers. Die Log-Datei 25 beschreibt zumindest welche Kategorie von Daten von wo und wann in der Recheneinheit 9 empfangen worden ist. Unter einer Kategorie ist dabei ein Ordnungskriterium zu verstehen, welches eine Zuordnung von Daten erlaubt. Der Systembetreiber kann über die Datenverbindung 15 auf das Revisionsmodul 14 und damit auf die Log-Datei zugreifen und sich zu jeder Zeit einen Überblick darüber zu verschaffen welche seiner Daten in der Recheneinheit 9 abgelegt sind.

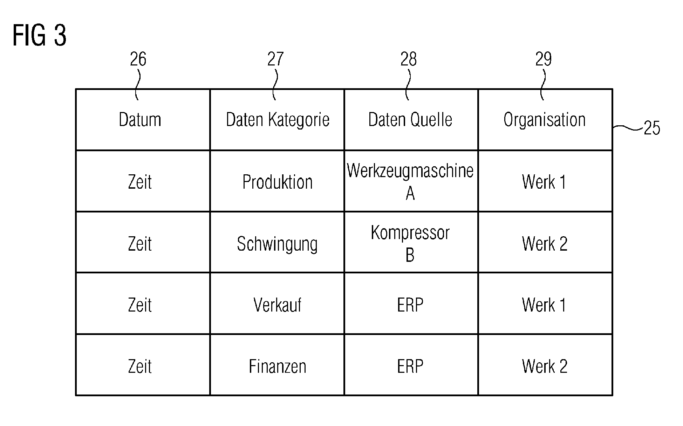

Fig. 3 zeigt beispielshaft einen möglichen Ausschnitt aus einer Log-Datei 25 für den Systembetreiber A. Die Daten werden mit Eingang in der anlagenexternen Recheneinheit 9 mit einem Zeitstempel 26 versehen. Als Datenkategorien 27 sind beispielhaft die Kategorien "production", vibration", "sales", "financial" vorgesehen. Für jeden Eintrag in die Log-Datei werden zusätzlich die Datenherkunft 28 und ein Datum zur Organisationseinheit 29 erfasst. Für die Datenherkunft zeigt Fig. 5 beispielhaft die Einträge "Werkzeugmachine" "Kompressor", "ERP", für das Datum zur Organisationseinheit das Werk 1 oder 2 des Systembetreibers A.

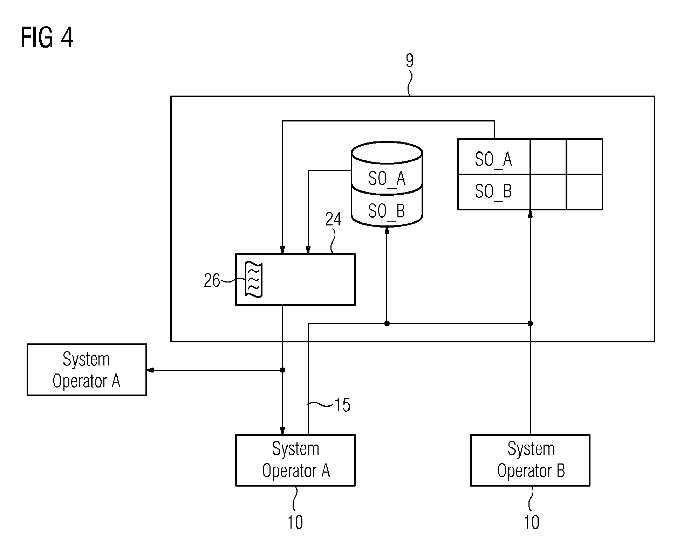

Fig. 4 zeigt eine Variante der Erfindung, nach dem das Revisionsmodul 24 konfigurierbar ist und das ausschließlich der Kontrolle des Systembetreibers unterliegt. Der Systembetreiber kann das Revisionsmodul über sein Gateway 10 aus dem System 100 heraus abfragen, um herauszufinden welche seine lokalen Daten in der anlagenexternen Recheneinheit 9 gespeichert sind. Eine Log-Datei, die die Daten mit dem Eingang in die anlagenexterne Recheneinheit in der Log Datei protokolliert wird nicht unterhalten. Das Protokollieren der Daten im Revisionsmodul bzw. in einer Log Datei 25 erfolgt dann erst mit der Abfrage durch den Systembetreiber und der Ausgabe des Ergebnisses an den Systembetreiber, indem ein Protokoll der aktuell gespeicherten Daten ausgegeben wird. Das erhöht die Transparenz der Datenablage für den Systembetreiber, weil er auf diese Weise auch noch andere Aspekte der Einhaltung von Vorschriften überprüfen kann. So können das Grundsätze und Vorschriften sein, wie mit Daten im weiteren Verlauf umzugehen sind. Während beispielsweise bestimmte Finanzdaten unter keinen Umständen den Hoheitsbereich des Systembetreibers verlassen dürfen, sind Daten, die älter als ein festlegbares Datum sind, mit Ablauf dieses Datums wieder zu löschen. Das Protokoll des Revisionsmoduls erlaubt es dem Systembetreiber jederzeit seine Vorschriften bezüglich des Datenumgangs zu überprüfen.

## Patentansprüche

1. System (100) zur Steuerung und/oder Analytik eines industriellen Prozesses (1), aufweisend anlagenseitig wenigstens eine Automatisierungs- oder Rechnereinheit (2, 5, 6, 7) eines Systembetreibers, wobei die wenigstens eine Automatisierungs- und Rechnereinheit die erste Prozessgrößenberechnungen (19) durchführt und auf den Prozess (1) einwirkt, aufweisend anlagenextern eine Recheneinheit (9) eines vom Systembetreiber verschiedenen Servicebetreibers, wobei die anlagenexterne Recheneinheit eine Anzahl zweiter Prozessgrößenberechnungen (14) durchführt und über eine Datenverbindung (15) lokale Data (3, 4, 12, 19) von der wenigstens einen Automatisierungs- oder Rechnereinheit (2, 5, 6, 7) erhält, **dadurch gekennzeichnet, dass** die anlagenexterne Recheneinheit (9) ein Revisionsmodul (24) aufweist, wobei das Revisionsmodul die von der wenigstens einen Automatisierungs- und Rechnereinheit erhaltenden lokalen Daten (3, 4, 12) protokolliert und für einen Zugriff des Systembetreibers außerhalb der wenigstens einen anlagenseitigen Automatisierungs- und Rechnereinheiten bereitstellt.

2. System nach Anspruch 1 **dadurch gekennzeichnet, dass** das Revisionsmodul eine Protokolldatei (25) umfasst, welche die lokalen Daten wenigstens nach Systembetreiber und/oder Datenherkunft und/oder Datenankunftszeit und/oder Datenkategorie mit Eingang der Daten speichernd erfasst und der Zugriff des Systembetreibers auf diese Protokolldatei erfolgt.

3. System nach Anspruch 2 **dadurch gekennzeichnet dass** die Kategorisierung der Daten mit Hilfe einer automatischer Klassifizierung auf Basis überwachter oder nicht überwachter Lernmodellen erfolgt.

4. System nach Anspruch 1 **dadurch gekennzeichnet, dass** das Revisionsmodul eine Protokolldatei (26) umfasst, welches die in der anlagenexternen Recheneinheit aktuell gespeicherten lokalen Daten und/oder zweiten Prozessgrößenberechnungen auf Anforderung des Systembetreibers innerhalb der anlagenexternen Recheneinheit protokolliert und dem Systembetreiber bereitstellt.

5. System nach Anspruch 4 **dadurch gekennzeichnet, dass** das Revisionsmodul ein Momentaufnahme-Modul umfasst, welches die in der anlagenexternen Recheneinheit aktuell gespeicherten lokalen Daten und/oder zweiten Prozessgrößenberechnungen auf Anforderung des Systembetreibers oder in bestimmten Zeitintervallen automatisch innerhalb der anlagenexternen Recheneinheit dupliziert.

6. System nach Anspruch 5, **dadurch gekennzeichnet, dass** die Protokolldatei sich aus den Daten des Momentaufnahme-Moduls speist.

7. System nach Anspruch 1 **dadurch gekennzeichnet, dass** das Revisionsmodul ein Regulierungsmodul umfasst, welches für den Systembetreiber einen lesenden und/oder schreibenden Zugriff auf die lokalen Daten erlaubt.

8. Anlagenexterne Recheneinheit (9) zur Steuerung und/oder Analytik wenigstens eines industriellen Prozesses eines Systembetreibers, wobei die anlagenexterne Recheneinheit eine Anzahl zweiter Prozessgrößenberechnungen (14) für den wenigstens einen industriellen Prozess (1) durchführt und über wenigstens eine Datenverbindung (15) lokale Daten (3, 4, 12, 19) von wenigstens einer anlagenseitigen Automatisierungs- oder Rechnereinheit (2, 5, 6, 7) von dem wenigstens einen industriellen Prozess erhält, wobei die wenigstens eine anlagenseitige Automatisierungs- und Rechnereinheit erste Prozessgrößenberechnungen (19) für den industriellen Prozess durchführt und über die ersten Prozessgrößenberechnungen oder die zweiten Prozessgrößenberechnungen auf den Prozess einwirkt, **dadurch gekennzeichnet, dass** die anlagenexternen Recheneinheit wenigstens ein Revisionsmodul (24) aufweist, welches die lokalen Daten protokolliert und für einen Zugriff des Systembetreibers außerhalb der wenigstens einen anlagenseitigen Automatisierungs- und Rechnereinheiten bereitstellt.

9. Anlagenexterne Recheneinheit nach Anspruch 8 **dadurch gekennzeichnet, dass** die anlagenexterne Recheneinheit über Datenverbindungen zu einer Mehrzahl von anlagenseitigen Automatisierungs- und Rechnereinheiten unterschiedlicher Systembetreiber verfügt und die anlagenexterne Recheneinheit jeweils ein Revisionsmodul aufweist, welches die lokalen Daten der anlagenseitigen Automatisierungs- und Rechnereinheiten pro Systembetreiber protokolliert und für den Zugriff durch den jeweiligen Systembetreiber bereitstellt.

10. Anlagenexterne Recheneinheit nach Anspruch 8 oder 9, **dadurch gekennzeichnet, dass** das Revisionsmodul eine Protokolldatei (25) umfasst, welche die lokalen Daten wenigstens nach Dateneigentümer und/oder Datenherkunft und/oder Datenankunftszeit und/oder Datenkategorie mit Eingang der Daten speichernd erfasst und der Zugriff des Systembetreibers auf diese Protokolldatei erfolgt.

11. Anlagenexterne Recheneinheit nach Anspruch 8, **dadurch gekennzeichnet, dass** das Revisionsmodul dass das Revisionsmodul eine Protokolldatei (26) umfasst, welches die in der anlagenexternen Recheneinheit aktuell gespeicherten lokalen Daten auf Anforderung des Systembetreibers innerhalb der anlagenexternen Recheneinheit protokolliert und dem Systembetreiber bereitstellt.

12. Anlagenexterne Recheneinheit nach Anspruch 11, **dadurch gekennzeichnet, dass** das Revisionsmodul ein Momentaufnahme-Modul umfasst, welches die in der anlagenexternen Recheneinheit aktuell gespeicherten lokalen Daten auf Anforderung des Systembetreibers oder in bestimmten Zeitintervallen automatisch innerhalb der anlagenexternen Recheneinheit dupliziert.

13. Anlagenexterne Recheneinheit nach Anspruch 12, **dadurch gekennzeichnet, dass** die Protokolldatei sich aus den Daten des Momentaufnahme-Moduls speist.

14. Anlagenexterne Recheneinheit nach Anspruch 8, **dadurch gekennzeichnet, dass** das Revisionsmodul ein Regulierungsmodul umfasst, welches für den Systembetreiber einen lesenden oder schreibenden Zugriff auf die lokalen Daten erlaubt.
